# EUROPÄISCHE PATENTSCHRIFT

(11) **EP 3 221 071 B1**
(45) Veröffentlichungstag und Bekanntmachung des Hinweises auf die Patenterteilung: **30.12.2020**
(21) Anmeldenummer: 15791557.0
(22) Anmeldetag: 03.11.2015
(51) Int. Cl.: B22D 19/00, B22D 11/06, B21C 37/02

(54) **VERFAHREN ZUR HERSTELLUNG EINES VERBUNDWERKSTOFFES**
METHOD FOR PRODUCING A COMPOSITE MATERIAL
PROCÉDÉ DE FABRICATION D'UN MATÉRIAU COMPOSITE

(30) Priorität: 19.11.2014 DE 102014116949
(43) Veröffentlichungstag der Anmeldung: 27.09.2017
(73) Patentinhaber: ThyssenKrupp Steel Europe AG, 47166 Duisburg (DE); thyssenkrupp AG, 45143 Essen (DE)
(72) Erfinder: BECKER, Jens-Ulrik, 47058 Duisburg (DE); MEMPEL, Rüdiger, 44269 Dortmund (DE); MYSLOWICKI, Stefan, 41238 Mönchengladbach (DE); WUNDERLICH, Roland, 59192 Bergkamen (DE); ZEMKE, Ralf, 46569 Hünxe (DE)
(74) Vertreter: ThyssenKrupp Steel Europe AG
(86) Internationale Anmeldenummer: PCT/EP2015/075522
(87) Internationale Veröffentlichungsnummer: WO 2016/078903

(56) Entgegenhaltungen:
- DE-A1- 10 011 758
- DE-A1- 10 011 758
- DE-A1- 10 202 212
- DE-A1- 10 202 212
- US-A- 1 757 790
- US-A- 1 757 790
- US-A1- 2006 177 683

## Beschreibung

### Stand der Technik

Die vorliegende Erfindung betrifft ein Verfahren zur Herstellung eines Verbundwerkstoffs.

In solchen Verbundwerkstoffen werden Verbundkomponenten, wie beispielsweise Stahlgüten unterschiedlicher Zusammensetzung, zu einem Verbundwerkstoff zusammengefügt. Beabsichtigt ist dabei, einen Verbundwerkstoff zur Verfügung stellen zu können, der gewünschte Eigenschaften der einzelnen Verbundkomponenten in einem Verbundwerkstoff vereint.

Der Stand der Technik kennt zur Realisierung eines solchen Verbundwerkstoffs beispielsweise aus der Druckschrift EP 946 315 A1 ein Stranggießverfahren, bei dem die Verbundkomponenten ineinander gegossen werden. Hierdurch kann es bei Kombination bestimmter Stahlqualitäten zu partiellem oder vollständigem Aufschmelzen bzw. zum Vermischen der Stahlqualitäten kommen. Anschließend wird der durch den Guss gebildete Verbund gewalzt bzw. plattiert. Aus der Druckschrift GB 2 033 794 A ist ein Verfahren bekannt, mit dem Verbundbleche oder -platten hergestellt werden, indem die Plattenpakete in eine Schmelze getaucht werden. Weiterhin ist aus der Druckschrift WO 01/68293 A1 ein Verfahren bekannt, bei dem in einem Gussverfahren Kern- und Randschichten zur Bildung des Verbundwerkstoffs miteinander stoffschlüssig durch oberflächliches Aufschmelzen miteinander verbunden werden.

Eine andere Methode zur Anordnung der Verbundkomponenten zum Verbund ist aus der Druckschrift DE 10 2005 006 606 B3 bekannt, bei der die einzelnen Verbundkomponenten als Platten durch eine umlaufende Verschweißung miteinander verbunden werden. Dabei hat es sich als Nachteil erwiesen, dass sich diese Verschweißung, verursacht durch unterschiedliche thermische Ausdehnungen, bei bestimmten Kombinationen von Stahlgüten bei der Wiedererwärmung des geschweißten Plattenpakets für einen Warmwalzprozess, wieder öffnen und die Verbundpartner voneinander lösen können.

Weitere Verfahren zur Herstellung von Verbundkomponenten sind beispielhaft in den Druckschriften DE 100 11 758 A1, DE 102 02 212 A1, US 1 757 790 A und US 2006/0177683 A1 beschrieben.

### Offenbarung der Erfindung

Es ist eine Aufgabe der vorliegenden Erfindung ein Verfahren zur Verfügung zu stellen, mit dem möglichst problem- und fehlerfrei Verbundwerkstoffe hergestellt werden können.

Die Aufgabe der vorliegenden Erfindung wird gelöst durch ein Verfahren zur Herstellung eines Verbundwerkstoffes, wobei in einem ersten Verfahrensschritt eine feste erste Verbundkomponente bereitgestellt wird, wobei in einem zweiten Verfahrensschritt eine zwei Verbundkomponente zur Bildung eines Verbunds derart zugegossen wird, dass im Kontaktbereich im Wesentlichen eine stoffschlüssige Verbindung zwischen der ersten Verbundkomponente und der zweiten Verbundkomponente vermieden wird, wobei im zweiten Verfahrensschritt ein Temperaturunterschied zwischen der ersten Verbundkomponente und der zweiten Verbundkomponente von mehr als 500 °C realisiert wird, und wobei in einem dritten Verfahrensschritt zur Herstellung des Verbundwerkstoffs die erste Verbundkomponente und die zweite Verbundkomponente im Kontaktbereich durch ein Warmwalzverfahren miteinander stoffschlüssig verbunden werden.

Im Gegensatz zum Stand der Technik werden die Stoffkomponenten für die Bildung des Verbunds nach dem Gussverfahren ohne stoffschlüssige Verbindung zusammengehalten. Erst durch das Warmwalzen wird dann die stoffschlüssige Verbindung realisiert. Dabei erweist sich das erfindungsgemäße Verfahren insofern als vorteilhaft, als dass die beim Gussverfahren erfolgenden Volumenänderungen der Verbundkomponenten, vorzugweise deren Schrumpfen, dazu genutzt werden können, Lufteinschlüsse zwischen der ersten Verbundkomponente und der zweiten Verbundkomponente weitestgehend zu vermeiden. Durch das Gussverfahren wird dann in vorteilhafter Weise ein Verbund realisiert, der einen Transport, ein Aufheizen für den dritten Verfahrensschritt und ein Anstechen beim Walzvorgang übersteht, ohne dass sich die Verbundkomponenten voneinander trennen. Weiterhin sorgt das Verfahren in vorteilhafter Weise dafür, dass durch einen im Wesentlichen stoffschlussfreien Verbund die Verbundkomponenten im dritten Verfahrensschritt stoffschlüssig miteinander verbunden werden können. Insbesondere ist es vorgesehen, dass die zugegossene flüssige zweite Verbundkomponente zeitlich nach dem zweiten Verfahrensschritt erstarrt.

Vorzugsweise werden im ersten Verfahrensschritt mehrere feste Verbundkomponenten, vorzugsweise mehrere verschiedene feste erste Verbundkomponenten, bereitgestellt und/oder im zweiten Verfahrensschritt mehrere zweite Verbundkomponenten, vorzugsweise mehrere verschiedene flüssige zweite Verbundkomponenten, zugegossen. Beim Erstarren der zweiten Verbundkomponente weist die zweite Verbundkomponente eine größere Volumenänderung, vorzugsweise ein Schrumpfen, auf als die erste Verbundkomponente. Hierdurch werden die zweite Verbundkomponente und die erste Verbundkomponente miteinander verpresst bzw. verklemmt, wodurch der gewünschte Verbund zunächst ohne stoffschlüssige Verbindung realisiert wird. Insbesondere wird im Gussverfahren oder zeitlich nach dem zweiten Verfahrensschritt dafür gesorgt, dass der Verbund im dritten Verfahrensschritt ohne Lufteinschlüsse zwischen der ersten und der zweiten Verbundkomponente bereitgestellt wird. Dabei wird gezielt durch die Art des Gussverfahrens ein Aufschmelzen der zweiten Verbundkomponente auf die erste Verbundkomponente im Wesentlichen vermieden. Insbesondere wird durch das Gussverfahren ein solcher Verbund aus den Verbundkomponenten gebildet, der problemlos von der Gussvorrichtung zu einer Walzvorrichtung für den dritten Verfahrensschritt gebracht werden kann. Außerdem lässt sich mit dem zeitlich bis zum dritten Verfahrensschritt stoffschussfreien Verbund vermeiden, dass beim Erwärmen ein Lösen der aneinander fixierten Verbundkomponenten auftritt, so wie es möglich wäre, wenn man die aus dem Stand der Technik bekannten Schweißnähte für die Bildung des Verbunds verwenden würde.

Erfindungsgemäß ist es vorgesehen, dass im zweiten Verfahrensschritt ein Temperaturunterschied zwischen der ersten und der zweiten Verbundkomponente von mehr als 500 °C realisiert wird. Dadurch lässt sich ein gezieltes "Nichtverbinden" der Verbundkomponenten bzw. ein im Wesentlichen vollständiges Aufschmelzen der ersten Verbundkomponente auf die zweite Verbundkomponente in vorteilhafter Weise vermeiden und sicherstellen, dass im Wesentlichen keine stoffschlüssige Verbindung zwischen den Verbundkomponenten realisiert wird.

Vorteilhafte Ausgestaltungen und Weiterbildungen der Erfindung sind den Unteransprüchen, sowie der Beschreibung unter Bezugnahme auf die Zeichnungen entnehmbar.

In einer weiteren Ausführungsform der vorliegenden Erfindung ist es vorgesehen, dass im zweiten Verfahrensschritt die zweite Verbundkomponente in einen von der ersten Verbundkomponente begrenzten Bauraum bzw. Zwischenraum hineingegossen wird.

In einer weiteren Ausführungsform der vorliegenden Erfindung ist es vorgesehen, dass im ersten Verfahrensschritt die erste Verbundkomponente als Block zur Verfügung gestellt wird und eine zweite Verbundkomponente im zweiten Verfahrensschritt derart hinzugegossen wird, dass die erste Verbundkomponente, vorzugsweis vollständig, von der zweiten Verbundkomponente ummantelt wird. Dadurch werden die Verbundkomponenten im Verbund in vorteilhafter Weise positionssicher zueinander fixiert.

In einer weiteren Ausführungsform der vorliegenden Erfindung ist es vorgesehen, dass die erste Verbundkomponente durch einen Kern, einen Stab und/oder durch eine oder mehrere Platten, insbesondere verschiedenartiger Güten, und die zweite Verbundkomponente durch eine Schmelze oder mehrere Schmelzen, insbesondere verschiedenartiger Güten, realisiert werden. Insbesondere lässt sich in vorteilhafter Weise durch die Verwendung von Platten oder Stäben ein mehrlagiger oder faserartiger Verbundwerkstoff realisieren. Beispielsweise bilden die Platten eine Begrenzung für den Verbund und bilden im späteren Verbundwerkstoff die Oberfläche, dessen Oberflächeneigenschaften zumindest teilweise von den Materialeigenschaften der Platten mitbestimmt werden. Dabei ist es denkbar, dass unterschiedliche Platten bzw. Stäbe als erste Verbundkomponente in die Gussvorrichtung eingelassen werden und dadurch ein Verbundwerkstoff realisiert wird, dessen Oberflächen bzw. Kerne unterschiedliche physikalisch-chemische Eigenschaften haben.

In einer weiteren Ausführungsform der vorliegenden Erfindung ist es vorgesehen, dass ein Verbund mit einem prozentualen Volumenanteil einer innenliegenden Verbundkomponente am Gesamtvolumen von mehr als 30% realisiert wird. Dabei kann die innenliegende Verbundkomponente die erste Verbundkomponente, die von der zweiten Verbundkomponente umhüllt ist, oder die zweite Verbundkomponente, die von der ersten Verbundkomponente umhüllt ist, sein. Insbesondere bildet die innenliegende Verbundkomponente einen Kern. Dabei ist es auch denkbar, dass eine innenliegende Verbundkomponente mehrteilig ausgestaltet ist und der jeweilige Volumenanteil durch die Summe über alle einzelnen Teile der innenliegenden Verbundkomponente bestimmt wird. Durch den hohen prozentualen Volumenanteil der innenliegenden Verbundkomponente lässt sich die innenliegende Verbundkomponente idealerweise zum Abtransport der Wärme und damit zum Kühlen im Gussverfahren nutzen.

In einer weiteren Ausführungsform der vorliegenden Erfindung ist es vorgesehen, dass das Gussverfahren in einer Kokille realisiert wird. Durch die Verwendung der Kokille lässt sich eine bereits für Gussverfahren etablierte Vorrichtung für das Verfahren zur Herstellung des Verbundwerkstoffs auf einfache und unkomplizierte Weise nutzen.

In einer weiteren Ausführungsform der vorliegenden Erfindung ist es vorgesehen, dass im dritten Verfahrensschritt zum Verdichten potentieller Lunker der Verbund verformt wird.

In einer weiteren Ausführungsform der vorliegenden Erfindung ist es vorgesehen, dass die erste und/oder die zweite Verbundkomponente derart im Gussverfahren ausgestaltet werden, dass ein formschlüssiges Zusammenwirken der ersten Verbundkomponente und der zweiten Verbundkomponente im Verbund realisiert wird. Insbesondere ist es vorgesehen, dass ein Brammenabschnitt, der Oszillationsmarken aufweist, als erste Verbundkomponente bereitgestellt wird. Nach dem Gussverfahren unterstützt dann die Form der ersten Verbundkomponente und der ausgehärteten zweiten Verbundkomponente eine Haftung der Verbundkomponenten im Verbund. Dabei ist es denkbar, dass die ausgehärtete zweite Verbundkomponente in die erste Verbundkomponente eingreift bzw. mit ihr verhakt.

In einer weiteren Ausführungsform der vorliegenden Erfindung ist es vorgesehen, dass als Verbundkomponenten zwei unterschiedliche Materialien, insbesondere verschiedene Stahlgüten, verwendet werden. Beispielsweise wird eine kohlenstoffreiche erste Verbundkomponente als Stab oder ein anders geformter Festkörper in die Kokille eingebracht und danach wird der Stab oder der anders geformte Festkörper von einer kohlenstoffarmen zweiten Verbundkomponente umgossen. Dadurch lässt sich ein Verbundwerkstoff realisieren, der in vorteilhafter Weise die Eigenschaften des kohlenstoffarmen und der kohlenstoffreichen Verbundkomponente vereint.

In einer weiteren Ausführungsform der vorliegenden Erfindung ist es vorgesehen, dass die Verbundkomponenten aus Metallen, vorzugsweise Kombinationen von C-Stählen, RSH-Stählen, FeMn-Stählen, FeAlCr-Stählen, Ni-, Ti-, Al- und/oder Mg -Legierungen, bestehen.

In einer weiteren Ausführungsform der vorliegenden Erfindung ist es vorgesehen, dass die erste Verbundkomponente im zweiten Verfahrensschritt als Gussform und/oder Verschalung bereitgestellt wird und/oder durch mehrere erste Verbundkomponenten eine oder mehrere Gussformen und/oder eine oder mehrere Verschalungen gebildet werden. Insbesondere lassen sich die erste Verbundkomponente in Ihrer Form und Größe an eine für den Verbundwerkstoff gewünschte Form anpassen. Es ist dabei vorgesehen, dass die Verbundkomponenten in der Kokille fixiert werden. Insbesondere sind die als Gussformen oder Verschalungen ausgebildeten ersten Verbundkomponenten an die Form und Größe der Kokille angepasst.

In einer weiteren Ausführungsform der vorliegenden Erfindung ist es vorgesehen, dass die Verbundkomponenten durch das Gießen im zweiten Verfahrensschritt in einem angestrebten Volumen- und/oder Seitenverhältnis bereitgestellt werden. Insbesondere ist es vorgesehen, dass das Seitenverhältnis nach dem Warmwalzen erhalten bleibt, auch wenn der Verbund durch das Warmwalzen plattiert wird und entsprechend entlang einer Ausdehnungsrichtung zusammengepresst wird. Durch das Beibehalten der Seitenverhältnisse lässt sich bereits bei der Bildung des Verbunds bestimmen, in welchem Verhältnis die Verbundkomponenten im Verbundwerkstoff vorliegen sollen. Dadurch lässt sich in vorteilhafter Weise die Ausgestaltung des Verbundwerkstoffes steuern.

In einer weiteren Ausführungsform der vorliegenden Erfindung ist es vorgesehen, dass eine beliebige geometrische Struktur der ersten und/oder der zweiten Verbundkomponente realisiert wird. Insbesondere lässt sich die Struktur derart anpassen, dass sie den gewünschten Forderungen an den später gefertigten Verbundwerkstoff entspricht. Dabei ist denkbar, dass die Struktur derart gewählt wird, dass sie an eine mögliche Beanspruchung bzw. Belastung des später gefertigten Verbundwerkstoffs angepasst ist. Durch das Gussverfahren ist man dabei in seiner Gestaltungsfreiheit uneingeschränkter als bei den Verfahren nach dem Stand der Technik, bei dem die Verbundkomponenten lediglich zum Verbund gefügt werden.

In einer weiteren Ausführungsform der vorliegenden Erfindung ist es vorgesehen, dass der Verbund für den dritten Verfahrensschritt auf eine Walztemperatur erhitzt wird und dass der Verbund auf einer Warmwalzvorrichtung gewalzt wird.

Des Weiteren ist eine Vorrichtung zur Herstellung eines Verbundwerkstoffs beschrieben, wobei die Vorrichtung eine Kokille und eine Walzvorrichtung aufweist, wobei die Vorrichtung derart ausgestaltet ist, dass mit ihr ein erfindungsgemäßes Verfahren durchführbar ist.

Gegenüber dem Stand der Technik lässt sich mit einer solchen Vorrichtung ein Verbund realisieren, der einen Transport zu einer Vorwärmeinrichtung und das Aufheizen für den dritten Verfahrensschritt übersteht, ohne dass sich die Verbundkomponenten voneinander trennen.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt schematisch ein Verfahren gemäß einer ersten beispielhaften Ausführungsform der vorliegenden Erfindung.
Die **Figur 2 a bis e** zeigen schematisch verschiedene Gussformen für ein Verfahren gemäß einer zweiten beispielhaften Ausführungsform der vorliegenden Erfindung.
Die **Figur 3 a bis e** zeigen schematisch verschiedene Gussformen für ein Verfahren gemäß einer dritten beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In **Figur 1** ist schematisch ein Verfahren zur Herstellung eines Verbundwerkstoffs gemäß einer ersten beispielhaften Ausführungsform der vorliegenden Erfindung dargestellt. Insbesondere soll mit dem Verfahren ein Verbundwerkstoff bestehend aus mindestens zwei Verbundkomponenten realisiert werden, wobei als Verbundkomponenten zwei verschiedene Materialien verwendet werden. Die Verwendung verschiedener Verbundkomponenten zielt darauf ab, einen Verbundwerkstoff zu realisieren, der die jeweiligen Eigenschaften der einzelnen unterschiedlichen Verbundkomponenten möglichst im Verbundwerkstoff vereint. Bevorzug wird dafür im Vorfeld eines Plattierens in einem Walzverfahren ein brammen- oder blockförmiger Verbund 4 aus den gewünschten Verbundkomponenten, bevorzugt in einer angestrebten Schichtdickenverteilung, bereitgestellt. Anschließend wird der Verbund 4 vorzugsweise zur Bildung des Verbundwerkstoffs in Form eines Warmbandes mit Walzen 3 ausgewalzt. Aus dem Stand der Technik sind Verfahren bekannt, bei denen die Verbundkomponenten zur Bildung des Verbunds 4 übereinander gestapelt und anschließend umlaufend verschweißt werden. Für die Realisierung einer flächigen und stoffschlüssigen Verbindung der Verbundkomponenten im Verbund 4 ist es hierbei erforderlich, dass die Oberflächen der Verbundkomponenten zum Zeitpunkt des ersten Anstichs in einer für das Walzen vorgesehenen Walzvorrichtung 6 bzw. Walzgerüst sauber und zunderfrei sind. Diese Voraussetzungen sollen durch das umlaufende Verschweißen realisiert werden. Handelt es sich bei den Verbundkomponenten um solche, die sich beispielsweise hinsichtlich ihres Temperaturverhaltens, insbesondere hinsichtlich ihres thermischen Ausdehnungsverhaltens, bei der Wiederaufwärmung auf eine Warmwalztemperatur grundlegend unterscheiden, kann eine nachträgliche Zunderbildung zwischen den Verbundkomponenten infolge eines Versagens der Schweißnaht nicht sicher verhindert werden. Es ist daher Aufgabe, ein Verfahren zur Verfügung zu stellen, mit dem ein Verbund 4 bereitgestellt wird, der sich problemlos zu einem Verbundwerkstoff verwalzen lässt.

Es ist zur Herstellung des Verbundwerkstoffes vorgesehen, dass die Verbundkomponenten in einem zweiten Verfahrensschritt mittels eines Gussverfahrens, vorzugsweise in einer Kokille 11, derart zueinander angeordnet werden, dass in einem Kontaktbereich die Bildung einer stoffschlüssigen Verbindung im Wesentlichen vermieden wird. Insbesondere wird durch das Gussverfahren die umlaufende Verschweißung der Verbundkomponenten vermieden. Dabei ist es bevorzugt vorgesehen, dass eine erste Verbundkomponente 1 von einer zweiten Verbundkomponente 2 in der Kokille 11 umgossen wird. Durch ein im Rahmen des Gussverfahrens erfolgendes Schrumpfen der zweiten Verbundkomponente 2 wird die zweite Verbundkomponente 2 dann vorzugsweise derart mit der ersten Verbundkomponente 1 mechanisch formschlüssig verbunden, dass die erste Verbundkomponente 1 von der zweiten Verbundkomponente 2 umschlossen wird und zwischen der ersten und der zweiten Verbundkomponente 1 und 2 Lufteinschlüsse minimiert werden. Außerdem wird durch das Gussverfahren ein die Verbundkomponenten umfassender im Wesentlichen mechanischer Verbund 4 realisiert, der einen Transport, ein Aufheizen auf die Walztemperatur im Wiedererwärmungsofen und das Anstechen in einer Vorstraße der Warmwalzvorrichtung 6 bzw. des Warmwalzwerkes übersteht, ohne dass es zu einer unerwünschten Trennung der Verbundkomponenten kommt bzw. sich eine Verbundkomponente von der anderen löst. In einem an den zweiten Verfahrensschritt anschließenden dritten Verfahrensschritt wird durch das Warmwalzverfahren dann die stoffschlüssige Verbindung zur Bildung des Verbundwerkstoffes realisiert.

Bei der Bildung des Verbunds 4 ist es dabei insbesondere vorgesehen, dass beim Gussverfahren ein Aufschmelzen der zweiten Verbundkomponente 2 auf die erste Verbundkomponente 1 zumindest teilweise vermieden wird. Ein solches stoffschlussfreies Verbinden wird vorzugsweise durch eine Überhitzung von nur einer der beiden Verbindungskomponenten realisiert. Insbesondere ist es vorgesehen, dass im zweiten Verfahrensschritt zwischen den jeweiligen Verbundkomponenten eine Temperaturdifferenz von mehr als 500°C realisiert wird. Weiterhin ist es vorgesehen, dass eventuelle Lunker zwischen den Verbundkomponenten bei einer an das Gussverfahren anschließenden Umformung verdichtet werden. Weiterhin ist es vorgesehen, dass die erste Verbundkomponente 1 und/oder die zweite Verbundkomponente 2 im zweiten Verfahrensschritt derart ausgeformt werden, dass sie formschlüssig zusammenwirken. Beispielsweise werden als erste Verbundkomponente 1 Brammenabschnitte mit Oszillationsmarken verwendet, die derart formschlüssig mit der erstarrten zweiten Verbundkomponente 2 zusammenwirken, dass eine Haftung zwischen den Verbundkomponenten, insbesondere beim Transport des Verbunds 4, durch diesen Formschluss unterstützt wird. Weiterhin ist es vorgesehen, dass beispielsweise der Volumenanteil einer im Inneren des Verbunds 4 angeordneten ersten Verbundkomponente 1 mindestens 30% des Gesamtvolumens des Verbundes ausmacht. Vorzugsweise werden Kombinationen von C-Stählen, RSH-Stählen, , FeMN-Stählen, FeAlCr-StähIen, Ni-, Ti-, Al- -oder Mg-Legierungen verwendet. Beispiele für mögliche Kombinationen sind der folgenden Tabelle zu entnehmen:

| Erste oder zweite Verbundkomponente | Zweite oder erste Verbundkomponente |
|---|---|
| C-Stahl | RSH-Stahl |
| C-Stahl | Ni-Legierung |
| RSH-Stahl | Ni-Legierung |
| RSH-Stahl | FeAlCr-Stahl |
| RSH-Stahl | Ti-Legierung |
| RSH-Stahl | Al-Legierung |
| C-Stahl | FeMn-Stahl |
| C-Stahl | FeAlCr-Stahl |
| RSH-Stahl | Mg-Legierung |
| FeAlCr-Stahl | Ni-Legierung |

In den **Figur 2 a-e** sind schematisch Gussformen für ein Verfahren zur Herstellung eines Verbundwerkstoffs gemäß einer zweiten beispielhaften Ausführungsform der vorliegenden Erfindung dargestellt. Dabei bilden die Kokille 11 und die erste Verbundkomponente vorzugsweise im Wesentlichen die Gussform für die zweite Verbundkomponente. Insbesondere ist es vorgesehen, dass die erste Verbundkomponente 1 einen Kern bildet, der von einer die zweite Verbundkomponente 2 bildenden Schmelze 21 im Gussverfahren des zweiten Verfahrensschritts umgossen wird, wie es Figur 2a zeigt. Dabei nimmt die Schmelze 21 im Gussverfahren vorzugsweise den Platz ein, der von der Kokille 11, insbesondere durch die Begrenzung der Kokille 13, und dem Kern 1 als dazwischen liegender Bauraum bzw. Zwischenraum bereitgestellt wird. Insbesondere ist es vorstellbar, dass die erste Verbundkomponente 1 mehrgliedrig ist, wie es in den Figuren 2b bis 2e illustriert ist. Beispielsweise sind mehrere erste Verbundkomponenten 1 derart ausgerichtet, dass sie im Wesentlichen parallel zu einer Kante bzw. Begrenzung der Kokille 13 verlaufen, wobei die Kante der Kokille den Bauraum vorgibt, der dem Gussverfahren zur Verfügung steht. Denkbar ist auch, dass mehrere erste Verbundkomponenten 1 schachbrettartig zueinander angeordnet sind (siehe Figur 2d und 2e). Weiterhin ist es vorstellbar, dass die erste Verbundkomponente im Querschnitt eine beliebige Struktur 24 aufweist. Beispielsweise ist die Struktur zumindest teilweise eckig (2a bis 2d) oder kreis- bzw. ellipsenförmig (siehe Figur 2e) ausgestaltet.

In den **Figur 3 a-e** sind schematisch Gussformen für ein Verfahren zur Herstellung eines Verbundwerksstoffs gemäß einer zweiten beispielhaften Ausführungsform der vorliegenden Erfindung dargestellt. Für diese Ausführungsform ist es vorgesehen, dass die Gussform von der zweiten Verbundkomponente 2 gebildet wird, in die im Gussverfahren die erste Verbundkomponente 1 eingefüllt wird. Insbesondere ist es vorgesehen, dass durch die zweite Verbundkomponente 2 eine Verschalung 22 realisiert wird, die beispielsweise durch Platten 23 gebildet wird. Vorzugsweise wird das Verfahren dann zur Herstellung eines mehrlagigen, vorzugsweise dreilagigen Verbundwerkstoffs genutzt, wobei der in der Mitte liegende Teil des Verbundwerkstoffs durch die erste Verbundkomponente 1 gebildet wird, die wiederum jeweils von der zweiten Verbundkomponente 2 ummantelt wird. Weiterhin ist es denkbar, dass die im Wesentlichen als Gussform ausgebildete zweite Verbundkomponente 2 Aussparungen aufweist, in die im Gussverfahren die erste Verbundkomponente 1 gefüllt wird. Insbesondere sind die Aussparungen derart angeordnet, dass sie zumindest teilweise parallel und/oder senkrecht zu Kante der zweiten Verbundkomponente 2 verlaufen. Dabei ist es weiterhin denkbar, dass die Aussparungen schachbrettartig entlang eines Querschnitts durch die zweite Verbundkomponente 2 verteilen. Insbesondere wird eine die Aussparung begrenzende Struktur beliebig ausgestaltet. Beispielsweise ist die Struktur 24 einer oder mehrerer Aussparungen rechteckig-, kreis- oder ellipsenförmig. Weiterhin ist es vorstellbar, dass Aussparungen mit unterschiedlichen Strukturen 24 und/oder in unterschiedliche Größen regelmäßig und/oder unregelmäßig entlang des Querschnitts angeordnet sind.

### Bezugszeichenliste

- 1: erste Verbundkomponente
- 2: zweite Verbundkomponente
- 3: Walze
- 4: Verbund
- 5: Walzachse
- 6: Warmwalzvorrichtung
- 11: Kokille
- 13: Begrenzung der Kokille
- 21: Schmelze
- 22: Verschalung
- 23: Platte
- 24: Konturverlauf

## Patentansprüche

1. Verfahren zur Herstellung eines Verbundwerkstoffes, wobei in einem ersten Verfahrensschritt eine feste erste Verbundkomponente (1) bereitgestellt wird, wobei in einem zweiten Verfahrensschritt eine zweite Verbundkomponente (2) zur Bildung eines Verbunds (4) derart zugegossen wird, dass im Kontaktbereich eine stoffschlüssige Verbindung zwischen der ersten Verbundkomponente (1) und der zweiten Verbundkomponente (2) vermieden wird, wobei im zweiten Verfahrensschritt ein Temperaturunterschied zwischen der ersten Verbundkomponente (1) und der zweiten Verbundkomponente (2) von mehr als 500 °C realisiert wird, und wobei in einem dritten Verfahrensschritt die erste Verbundkomponente (1) und die zweite Verbundkomponente (2) im Kontaktbereich durch ein Warmwalzverfahren miteinander stoffschlüssig verbunden werden.

2. Verfahren gemäß Anspruch 1, wobei im zweiten Verfahrensschritt die erste Verbundkomponente (1)von der zweiten Verbundkomponente (2) umgossen oder die zweite Verbundkomponente in einen von der ersten Verbundkomponente (2) begrenzten Bauraum hineingegossen wird.

3. Verfahren gemäß Anspruch 2, wobei
-- die erste Verbundkomponente (1) durch einen Kern, einen Stab und/oder durch eine oder mehrere Platten (23)und
-- die zweite Verbundkomponente (2) durch eine Schmelze realisiert wird.

4. Verfahren gemäß einem der vorhergehenden Ansprüche, wobei ein Verbund (4) mit einem prozentualen Volumenanteil einer innenliegenden Verbundkomponente am Gesamtvolumen von mehr als 30% realisiert wird.

5. Verfahren gemäß einem der vorhergehenden Ansprüche, wobei das Gussverfahren in einer Kokille (11) realisiert wird.

6. Verfahren gemäß einem der vorhergehenden Ansprüche, wobei in dem dritten Verfahrensschritt der Verbund (4) zum Verdichten von Lunkern verformt wird.

7. Verfahren gemäß einem der vorhergehenden Ansprüche, wobei die erste Verbundkomponente (1) und/oder die zweite Verbundkomponente (2) im Gussverfahren derart ausgestaltet werden, dass ein formschlüssiges Zusammenwirken der ersten Verbundkomponente (1) und der zweiten Verbundkomponente (2) im Verbund (4) realisiert wird.

8. Verfahren gemäß einem der vorhergehenden Ansprüche, wobei als Verbundkomponenten (1, 2) mehrere unterschiedliche Materialien verwendet werden.

9. Verfahren gemäß einem der vorhergehenden Ansprüche, wobei als erste Verbundkomponente oder zweite Verbundkomponenten ein C-Stahl, ein RSH-Stahl, ein FeAlCr-Stahl, eine Ni-, Ti-, Al- -oder Mg-Legierungen und/oder ein FeMn-Stahl verwendet wird.

10. Verfahren gemäß einem der vorhergehenden Ansprüche, wobei
-- die erste Verbundkomponente (1) im zweiten Verfahrensschritt als Gussform und/oder Verschalung (23) bereitgestellt wird und/oder
-- durch mehrere Verbundkomponenten (1) und/oder mehrere Verschalungen gebildet wird.

11. Verfahren gemäß einem der vorhergehenden Ansprüche, wobei die Verbundkomponenten (1, 2) durch das Gießen im zweiten Verfahrensschritt in einem angestrebten Volumen- und/oder Seitenverhältnis bereitgestellt werden.

12. Verfahren gemäß einem der vorhergehenden Ansprüche, wobei eine beliebige geometrische Struktur (24) der ersten Verbundkomponente (1) und/oder der zweiten Verbundkomponente (2) realisiert wird.

13. Verfahren gemäß einem der vorhergehenden Ansprüche, wobei der Verbund (4) für den dritten Verfahrensschritt auf eine Warmwalztemperatur erhitzt wird und der Verbund in einem sich zeitlich an den dritten Verfahrensschritt anschließenden vierten Verfahrensschritt gewalzt wird.

## Claims

1. Method for producing a composite material, wherein a first method step involves providing a solid first composite component (1), wherein in a second method step a second composite component (2) is added by casting to form a composite (4) so as to avoid, in the contact region, a material bond between the first composite component (1) and the second composite component (2), wherein the second method step involves creating a temperature difference, between the first composite component (1) and the second composite component (2), of greater than 500°C, and wherein in a third method step the first composite component (1) and the second composite component (2) are materially bonded to one another in the contact region by means of a hot-rolling process.

2. Method according to Claim 1, wherein in the second method step the second composite component (2) is cast around the first composite component (1), or the second composite component is cast into a construction space bounded by the first composite component (2).

3. Method according to Claim 2, wherein
- the first composite component (1) consists of a core, a rod and/or one or more plates (23), and
- the second composite component (2) is made from a melt.

4. Method according to one of the preceding claims, wherein a composite (4) is produced that has a volumetric proportion of an inner composite component of greater than 30% of the total volume.

5. Method according to one of the preceding claims, wherein the casting process is carried out in a permanent mold (11).

6. Method according to one of the preceding claims, wherein in the third method step the composite (4) is deformed in order to compress voids.

7. Method according to one of the preceding claims, wherein the first composite component (1) and/or the second composite component (2) are configured in the casting process so as to establish a form-fitting engagement between the first composite component (1) and the second composite component (2) in the composite (4).

8. Method according to one of the preceding claims, wherein many different materials are used as the composite components (1, 2).

9. Method according to one of the preceding claims, wherein a carbon steel, a rust-, acid- and heat-resistant steel, an FeAICr steel, a Ni-, Ti-, Al- or Mg alloy and/or an FeMn steel is used as the first composite component or the second composite component.

10. Method according to one of the preceding claims, wherein
- in the second method step the first composite component (1) is provided as a casting mold and/or a shell (23), and/or
- consists of multiple composite components (1) and/or multiple shells.

11. Method according to one of the preceding claims, wherein the composite components (1, 2) are provided by means of the casting in the second method step in a desired volume ratio and/or aspect ratio.

12. Method according to one of the preceding claims, wherein any geometric structure (24) of the first composite component (1) and/or of the second composite component (2) is achieved.

13. Method according to one of the preceding claims, wherein for the third method step the composite (4) is heated to a hot-rolling temperature and the composite is rolled in a fourth method step temporally after the third method step.

## Revendications

1. Procédé de fabrication d'un matériau composite, un premier composant composite solide (1) étant fourni dans une première étape de procédé, un deuxième composant composite (2) étant ajouté dans une deuxième étape de procédé pour former un composite (4) de façon à éviter une liaison de matière dans la zone de contact entre le premier composant composite (1) et le deuxième composant composite (2), une différence de température entre le premier composant composite (1) et le deuxième composant composite (2) de plus de 500 °C étant réalisée dans la deuxième étape de procédé, et une liaison de matière étant réalisée dans une troisième étape de procédé dans la zone de contact entre le premier composant composite (1) et le deuxième composant composite (2) par un processus de laminage à chaud.

2. Procédé selon la revendication 1, le deuxième composant composite (2) étant versé autour du premier composant composite (1) ou le deuxième composant composite étant versé dans un espace de construction délimité par le premier composant composite (2) dans la deuxième étape de procédé.

3. Procédé selon la revendication 2,
- le premier composant composite (1) étant réalisé par un noyau, une tige et/ou par une ou plusieurs plaques (23) et
- le deuxième composant composite (2) étant réalisé par une matière fondue.

4. Procédé selon l'une des revendications précédentes, un composite (4) étant réalisé avec un pourcentage en volume d'un composant composite intérieur, rapporté au volume total, de plus de 30 %.

5. Procédé selon l'une des revendications précédentes, le procédé de coulée étant effectué dans une lingotière (11).

6. Procédé selon l'une des revendications précédentes, le composite (4) étant déformé dans la troisième étape du procédé pour comprimer des vides.

7. Procédé selon l'une des revendications précédentes, le premier composant composite (1) et/ou le deuxième composant composite (2) étant conçus dans le procédé de coulée de façon à établir dans le composite (4) une coopération par complémentarité de formes du premier composant composite (1) et du deuxième composant composite (2).

8. Procédé selon l'une des revendications précédentes, plusieurs matériaux différents étant utilisés comme composants composites (1, 2).

9. Procédé selon l'une des revendications précédentes, un acier au carbone, un acier RSH, un acier FeAICr, un alliage Ni, Ti, Al ou Mg et/ou un acier FeMn étant utilisés comme premier composant composite ou deuxième composant composite.

10. Procédé selon l'une des revendications précédentes,
- le premier composant composite (1) étant fourni dans la deuxième étape de procédé sous la forme d'un moule de coulée et/ou d'un coffrage (23) et/ou
- étant formé par plusieurs composants composites (1) et/ou plusieurs boîtiers.

11. Procédé selon l'une des revendications précédentes, les composants composites (1, 2) étant fournis par coulée dans la deuxième étape de procédé dans un rapport en volume et/ou de côtés souhaité.

12. Procédé selon l'une des revendications précédentes, une structure géométrique (24) quelconque du premier composant composite (1) et/ou du deuxième composant composite (2) étant réalisée.

13. Procédé selon l'une des revendications précédentes, le composite (4) étant chauffé à une température de laminage à chaud pendant la troisième étape de procédé et le composite étant laminé dans une quatrième étape de procédé qui suit la troisième étape de procédé.
